# EUROPEAN PATENT APPLICATION

(11) **EP 3 772 582 A1**
(43) Date of publication of application: **10.02.2021**
(21) Application number: 20197719.6
(22) Date of filing: 20.12.2014
(51) Int. Cl.: F03B 13/18, E02B 9/08

(54) **METHOD FOR MANUFACTURING A WAVE ENERGY CONVERSION APPARATUS**

(62) Divisional of application: 14908329.7
(71) Applicant: AW-Energy Oy, 01730 Vantaa (FI)
(72) Inventor: JÄRVINEN, Arvo, 01230 Vantaa (FI); VUORINEN, Matti, 02210 Espoo (FI); RIDGEWELL, Christopher, 00170 Helsinki (FI); MUCHA, Tomasz, 02760 Espoo (FI); BERG, Markus, 00780 Helsinki (FI)
(74) Representative: Salomäki, Juha Kari Ensio

(57) **Abstract**

This invention relates to a method for planning, designing and manufacturing a wave energy conversion apparatus to be used in relatively shallow water, the apparatus comprising at least: a base (1) arranged to be anchored to the sea bed; an upstanding fin (2) pivotally connected to said base (1), and arranged to oscillate in use back and forth about the vertical in response to wave motion acting on faces of the fin (2), and said fin (2) comprising a float part (2b) being sufficiently buoyant in water tending to assist the fin (2) to vertical; and power-take-off (PTO) means (7) for extracting energy from the motion of the fin (2). A wave energy conversion apparatus and particularly structure of the fin (2) and its components is planned, designed and dimensioned beforehand to be as efficient as possible exactly at its own installation site, so that the sea states of the installation site and a wanted energy production are taken as initial parameters.

## Description

The present invention relates to a method as defined in the preamble of claim 1 for manufacturing a wave energy conversion apparatus, for example such as presented in the applicant's own European patent application no. 14908329.7.

The wave energy conversion apparatus manufactured according to the invention is intended to be used in shallow water and is suited very well for instance to be used in connection with a panel or flap or essentially plate-like wing element, later called shorter only as a fin connected pivotally to a base foundation anchored to the sea bed to make oscillating motion backwards and forwards about the vertical in response to wave motion acting on faces of the fin. The wave energy or tidal energy collected is further converted for instance to electric energy. For the sake of simplicity, only the term wave energy is later mentioned when both the wave energy and the tidal energy of seawater are meant.

According to prior art there are various types of wave energy conversion systems where the arrangements include a base and, for instance, one or more fins pivotally connected to the base to make a reciprocating or oscillating movement about a rotation axis or pivot axis in response to wave forces or tidal forces. The oscillating movement is then converted for example to electric energy with the help of a power-take-off (PTO) unit equipped with a power-take-off (PTO) machinery comprising a generator or alike, and/or to production of desalinated water from seawater with the help of RO or flash technology or alike

One type of a prior art wave energy conversion system is shown in US patent No. US7834474 B2. This publication shows a wave energy conversion system where the apparatus is arranged so that when the base portion is anchored to the bed of a body of water with the fin portion facing the wave motion, the base portion and the fin portion extend vertically through at least the entire depth of the water, to present a substantially continuous surface to the wave motion throughout the full depth of water from the wave crest to the sea bed. In addition the fin portion is sufficiently buoyant in water so as to be biased to the vertical in use, and the fin portion also is provided with chambers, which contain air, gas or foam so that the buoyancy of the fin portion is adjustable by filling at least one of the chambers with water.

Another prior art wave energy conversion system, where the apparatus is arranged so that when the base portion is anchored to the bed of a body of water with the fin or flap portion facing the wave motion, the base portion and the fin or flap portion extend vertically through at least the entire depth of the water, to present a substantially continuous surface to the wave motion throughout the full depth of water from the wave crest to the sea bed, is shown in US patent No. US4371788.

A problem with the arrangement according to the US patent No. US7834474 B2 mentioned above and in general also with other prior art arrangements is a difficulty to produce a fin or flap whose buoyancy, forms and size are as optimized as possible to maximize the wave energy capture just in those particular sea conditions prevailing in the installation site of the wave energy conversion arrangement. The failure to dimension the apparatus and its components precisely leads often to over-dimensioning, which causes, among other things, additional costs.

Another problem with both the solutions of the US patents mentioned above is the fact that the upper part of the fin or flap extends through the surface of the water. In that case great indefinite forces are directed towards the structure of the conversion apparatus when the upper part of the fin or flap that has been above the surface of the water hits the water surface. These forces cause for instance different vibrations to the conversion apparatus. For that reason, the conversion apparatuses according to prior art have to be dimensioned bigger and stronger, which again causes, among other things, additional costs.

The object of the present invention is to eliminate the drawbacks described above and to achieve a method to plan, design and manufacture a wave energy conversion apparatus that is easy to configure for capturing a maximum amount of available wave or tidal energy particularly at the site where the apparatus is installed. The method for manufacturing a wave energy conversion apparatus according to the invention is characterized by what is presented in the characterization part of claim 1. Other embodiments of the invention are characterized by what is presented in the other claims.

The method of the invention has the advantage that the planning and designing of a wave energy conversion apparatus can be precisely focused resulting in a wave energy conversion apparatus with extremely high energy capturing and capacity. That means a higher power level and higher energy production than with prior art devices. Another advantage is that the apparatus and its components can be precisely dimensioned, which leads to smaller manufacturing costs because no over-measured components are needed.

In the following, the invention will be described in detail by the aid of examples by referring to the attached simplified and diagrammatic drawings, wherein
- Fig. 1: presents a simplified oblique top view of a wave energy conversion apparatus,
- Fig. 2: presents in a side view, partially cross-sectioned and in a simplified and diagrammatic way a wave energy conversion apparatus,
- Fig. 3: presents a simplified oblique top view of a wave energy conversion apparatus according to Fig. 1 partially cross-sectioned,
- Fig. 4: presents a simplified top view of a cross-sectioned part of the body of the fin of the energy conversion apparatus,
- Fig. 5: presents in a side view and in a simplified and diagrammatic way yet another fin equipped with auxiliary side wings at the upper edge of the fin in the first position,
- Fig. 6: presents in a side view and in a simplified and diagrammatic way the fin according to Fig. 5 with auxiliary side wings at the upper edge of the fin in the second position,
- Fig. 7: presents in a front view, seen in direction of an arrow C in Fig. 5, and in a simplified and diagrammatic way yet another fin equipped with auxiliary side wings at the upper edge of the fin and at the side edges of the fin in the first position, and
- Fig. 8: presents in a front view, seen in direction of an arrow C in Fig. 6, and in a simplified and diagrammatic way the fin according to Fig. 7 with auxiliary side wings at the upper edge of the fin and at the side edges of the fin in the second position.

The basic idea of the present invention is to achieve a method for designing and manufacturing a wave energy conversion apparatus where all the components, their locations, sizes and forms are planned, designed and dimensioned beforehand taking local sea conditions into consideration already in the planning and designing phase.

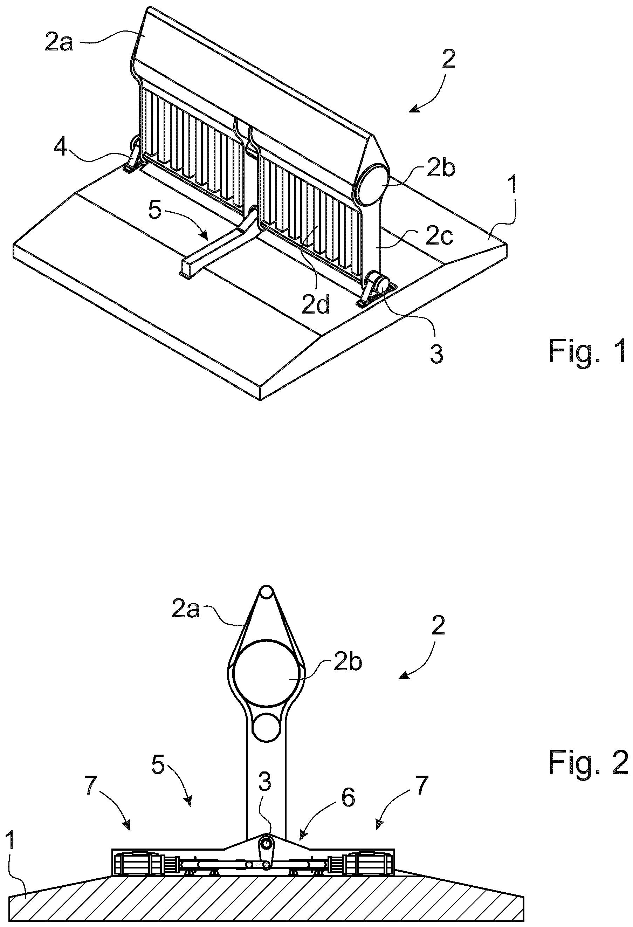

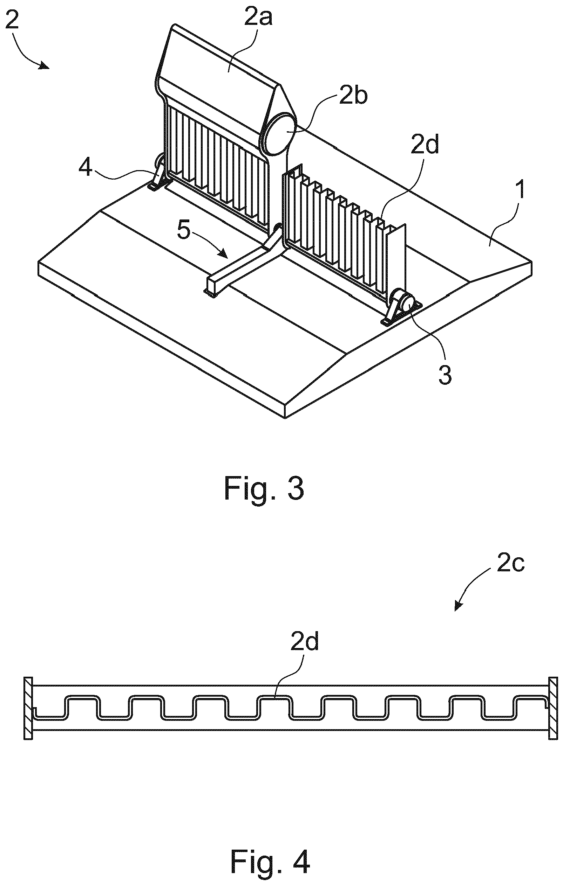

Figs. 1-4 present a wave energy conversion apparatus, such as a wave energy conversion apparatus according to the European patent application no. 14908329.7, in different views. The wave energy conversion apparatus comprises at least a base 1, a fin 2 reciprocating about its pivot shaft 3 supported by supporting legs 4, a driving and power-take-off (PTO) arrangement 5 having an actuating mechanism 6 and one or more hydraulic PTO units 7. The features and operating principles of the apparatus are presented in more detail in the European patent application no. 14908329.7.

The fin 2 comprises among other things an interchangeable upper part 2a, a float part 2b or pontoon part to cause buoyant force, and a fin body 2c supporting the upper part 2a and the float part 2b. The fin 2 is mounted on the pivot shaft 3 at the lower edge of the fin body 2c. Advantageously, the fin body 2c comprises a corrugated plate or plates to form a wall part 2d or barrier that blocks water passing through the fin 2. The corrugated form is stronger than the flat form, and therefore the structure of the wall part 2d can be designed lighter than the corresponding part in prior art arrangements. In the embodiments of Figs. 1-4 the direction of the corrugations is vertical extending from the lower part of the fin body 2c to the upper part of the fin body 2c. Alternatively, the direction of the corrugations may be horizontal extending from the first side edge of the fin body 2c to the second side edge of the fin body 2c. The length of the horizontal corrugations can also be shorter than mentioned above.

The float part 2b is a hollow pontoon whose size, location and buoyancy are precisely dimensioned during the planning and designing phase. Initial values for the design are the prevailing sea conditions at the installation site. Advantageously, the float part 2b is filled with gas, such like air but also other gas can be used, for instance gas that prevents corrosion. Also, various foams, lighter than water, can be used as a filling medium.

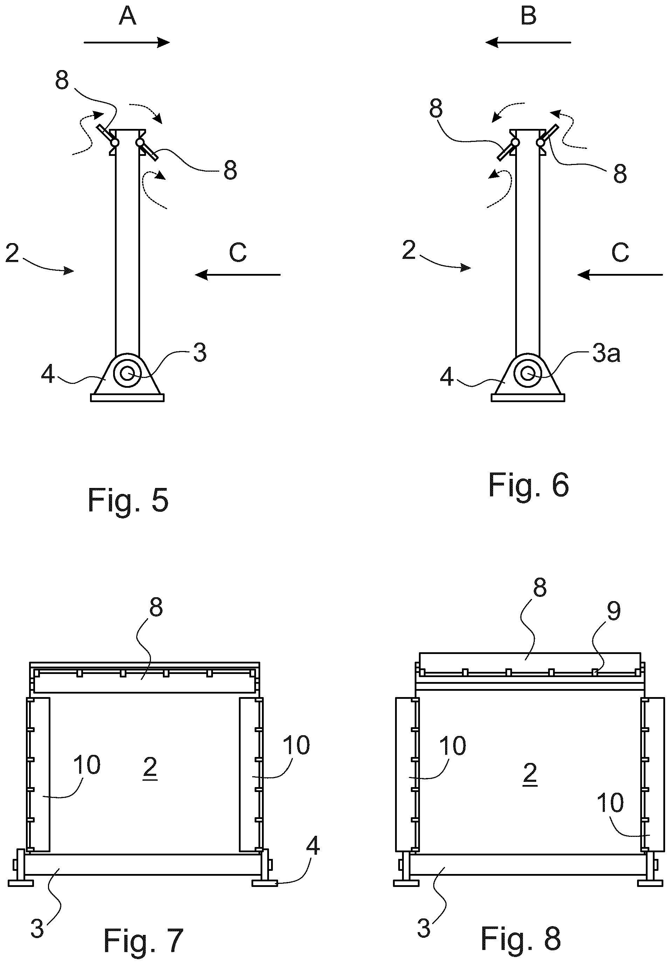

Figs. 5-8 present yet another structure in the fin according to the European patent application no. 14908329.7. In Figs. 5 and 6 the fin 2 is equipped with auxiliary side wings 8 at the upper edge of the fin 2. The side wings 8 are hinged at their first end at the upper edge of the fin 2 with a hinge arrangement 9 so that the side wings 8 can rotate freely around the hinge axis from the first end position to the second end position and vice versa.

In Fig. 5 the flow of the waves is directed in the direction of an arrow A and In Fig. 6 the flow of the waves is directed to the opposite direction in the direction of an arrow B. The arrows around the top part of the fin 2 describe the flow of the water around the side wings 8. The side wings 8 enlarge the surface of the fin 2 and at the same time make more obstacles against the flow of water in the side where the flow comes from, and also reduce the obstacle on the opposite side. As a consequence, the efficiency of the energy capture is increasing.

In the solutions of Figs. 7 and 8 the fin 2 is equipped in addition to the auxiliary side wings 8 at the upper edge of the fin 2, also with auxiliary side wings 10 at both the side edges of the fin 2. The side wings 10 increase the efficiency of the wave energy conversion apparatus.

The auxiliary side wings 8 and 10 are arranged to rotate automatically along with the effect of the flow of water and they can rotate between 0-90 degrees, suitably about 40-50 degrees and advantageously about 45 degrees inwards or outwards in relation to the fin 2.

Advantageously the fin 2 together with the base 1 is constructed so that when the base 1 is anchored to the sea bed with the fin 2 facing the wave motion, the fin 2 extends on the low tide vertically from the base 1 through the entire depth of water, and on the high tide the vertical extension of the fin 2 is smaller than the entire depth of water. So, on the high tide and during the mean water level the upper edge of the fin 2 is always under the water surface, and on the low tide the upper edge of the fin 2 reaches just to the water surface but never or hardly ever penetrates the water surface. However, in locations where the height difference between the low tide and the high tide is relatively large, for instance several meters, the fin 2 extends on the mean water level vertically from the base 1 through the entire depth of water, and on the high tide the vertical extension of the fin 2 is again smaller than the entire depth of water. Now only on the low tide the upper edge of the fin 2 penetrates the water surface.

According to the method of the invention a wave energy conversion apparatus, for example, such as presented in the European patent application no. 14908329.7 and particularly the structure of the fin 2 of a wave energy conversion apparatus is planned, designed and dimensioned beforehand to be as efficient as possible exactly at its own installation site. Thus, planning takes all the special sea states or conditions of the installation site into consideration, and the apparatus with its components is dimensioned as precisely as possible just for the sea conditions at that particular installation site.

Particularly the form and dimensions of the fin 2 are determined as well as the form, volume and location of the float part 2b in connection with the fin 2. As to the energy capture at the particular installation site the fin 2 is determined as optimal as possible using a determining function

| | |
|---|---|
| Function 1: | F(SS, FP) |

Function 1 comprises two groups of variables, namely SS and FP, where group SS depicts the probability distribution of the local sea states at the installation site, and group FP comprises the planning parameters of the planning object, for example the planning parameters of the fin 2.

| | |
|---|---|
| Variable group 1: | SS = Prob(Hm0, Te, Dir, Tide) |

where
Prob = Probability distribution, having values from 0 to 100 %, (0-100%)
Hm0 = Significant wave height, having values from 0 to 100 meters, (0-100m)
Te = Energy period, having values from 0 to 100 seconds, (0-100s)
Dir = Wave direction, having values from 0 to 360 degrees, (0-360°)
Tide = Tide height, having values from 0 to 100 meters, (0-100m).

| | |
|---|---|
| Variable group 2: | FP = H, W, HB, RB, HP, D |

where
H = Height of the fin 2, having values from 0 to 100 meters, (0-100m)
W = Width of the fin 2, having values from 0 to 100 meters, (0-100m)
HB = Distance between the center axis of the pivot shaft 3 and the center of the float part 2b, having values from 0 to 100 meters, (0-100m)
RB = Radius of the float part 2b, having values from 0 to 100 meters, (0-100m)
HP = Distance between the sea bed and the center axis of the pivot shaft 3, having values from 0 to 100 meters, (0-100m)
D = Depth of water at L.A.T., having values from 0 to 100 meters, (0-100m).

The method according to the invention comprises means, such as an optimizer to control the calculation and optimization of the planned object, such like the fin 2 of the wave energy conversion apparatus according to the European patent application no. 14908329.7. With the help of the optimizer, the calculation and optimization are controlled by selecting the planning parameters within the parameter limits in each calculation cycle. Using the calculation results of each cycle the optimizer is used to deduce to which direction the parameters should be changed for the next calculation cycle, until the parameters yield a satisfactory result.

With the method according to the invention the optimizer is used for calculation and optimization, for instance, in the following way:

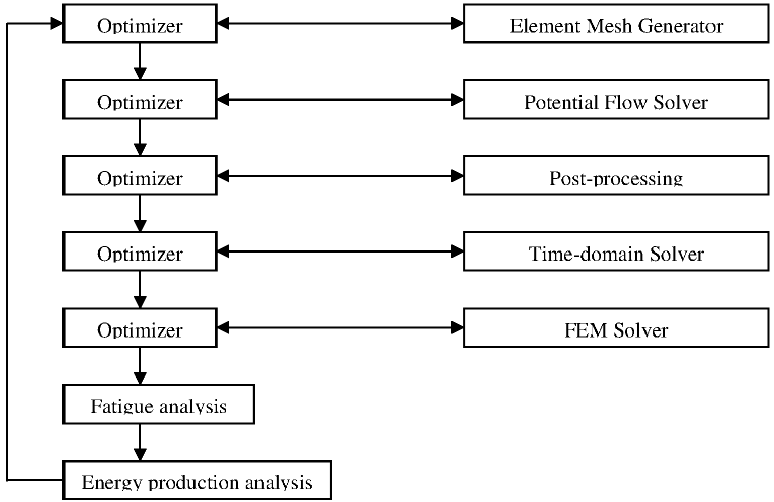

In one calculation cycle the method comprises, for example, following steps in an order described below:

### Step 1:

The initial planning parameters are chosen by using the optimizer. In this step the planning parameters used for instance are: geometry data of the fin 2, comprising for example the height and width of the fin body 2c, the radius of the float part 2b, the vertical location of the float part 2b, etc.

### Step 2:

An element mesh is created with an element mesh generator using the parameters chosen in Step1. In this step the elements of the calculation mesh are created. The form of the elements has been determined for example by the help of geometry so that an element can be a small square, and/or coordinates x, y, z for angles.

### Step 3:

The data of the calculation mesh is prepared to an appropriate file format using the optimizer. For example, the coordinate data of the elements created in Step 2 are arranged to the format that is suitable for the Potential Flow Solver.

### Step 4:

Hydrodynamic magnitudes are calculated using the Potential Flow Solver. As a result, the hydrodynamic magnitudes of the element mesh are gained. The hydrodynamic magnitudes are for instance: inertia of the liquid; attenuation terms in a frequency-domain for different wave directions; and a moment of the wave.

### Step 5:

Using the optimizer, the calculation results of Step 4 are prepared to an appropriate format for the next Step.

### Step 6:

The prepared results of Step 4 are post-processed in the Post-processing unit from the frequency-domain to the time-domain. In this Step, for instance, time depending constants of the attenuation term is calculated using impulse response functions.

### Step 7:

Using the optimizer, the handling results of Step 6 are post-processed to an appropriate format for the next Step.

### Step 8:

Needed prevailing sea state combinations are calculated using the Time-domain solver. In this Step different sea states are calculated in a time-domain. Variables used are for example: significant height of wave, energy period, direction of wave, form of spectrum, attenuation of the PTO 7. And the results of the calculations are for example: the motion of the fin 2, energy captured by the PTO, and forces directed towards the fin 2 in time-series.

### Step 9:

Using the optimizer, the calculation results of Step 8 are post-processed to appropriate loading data for the FE solver.

### Step 10:

An analysis about the forces is performed with a Finite Element Analysis (FEM) method using the FE solver. Results of the FEM are time-series of stresses of the critical points.

### Step 11:

Using the optimizer, the FEM results of Step 10 are post-processed to stress profiles. In this Step the time-series of stresses are converted to loading blocks, for example by using a rainflow analysis.

### Step 12:

A fatigue analysis is performed. By joining the loading blocks and the material-dependent S-N curves the fatigue life is calculated using, for instance, the Palmgren-Miner rule.

### Step 13:

An energy production analysis is performed by calculating average yearly energy using the average energy value captured by the PTO 7 and the probability distribution of the sea states.

### Step 14:

The calculation results are evaluated and if needed a new calculation cycle is initiated from Step 1. The evaluation is based on the fatigue result and the yearly amount of captured energy. If the evaluation yields satisfactory results the calculation is terminated, otherwise the planning parameters are changed and the calculation is started again from Step 1.

It is obvious to the person skilled in the art that the invention is not restricted to the examples described above but that it may be varied within the scope of the claims presented below. Thus, for example, in one calculation cycle the method may comprise more steps than what is presented above.

It is also obvious to the person skilled in the art that the method according to the invention can be used for manufacturing also other kinds of wave energy conversion apparatuses than that according to the European patent application no. 14908329.7.

## Claims

1. Method for manufacturing a wave energy conversion apparatus to be used in shallow water, the apparatus comprising at least: a base (1) arranged to be anchored to the sea bed; an upstanding fin (2) pivotally connected to said base (1), said fin (2) arranged to oscillate in use back and forth about the vertical in response to wave motion acting on faces of the fin (2), and said fin (2) comprising a float part (2b) being sufficiently buoyant in water tending to assist the fin (2) to vertical; and power-take-off (PTO) means (7) for extracting energy from the motion of the fin (2), **characterized in that** the wave energy conversion apparatus and particularly structure of the fin (2) and its components is planned, designed and dimensioned beforehand to be as efficient as possible exactly at its own installation site, so that the sea states of the installation site and a wanted energy production are taken as initial parameters, and the fin (2) with its components are dimensioned as precisely as possible just for the sea states at that particular installation site.

2. Method for manufacturing the wave energy conversion apparatus according to claim 1, **characterized in that** the upper edge and/or the side edges of the fin (2) are designed to be equipped with auxiliary side wings (8, 10) to change the water flow in the vicinity of the edge of the fin (2).

3. Method for manufacturing the wave energy conversion apparatus according to claim 2, **characterized in that** the auxiliary side wings (8, 10) are designed to work in pairs one on each side of the edge of the fin (2).

4. Method for manufacturing the wave energy conversion apparatus according to claim 2 or 3, **characterized in that** the auxiliary side wings (8, 10) are designed so that on the side of the fin (2) where the water flows towards the fin (2) the side wings (8, 10) turn outwards enlarging the surface area of the fin (2) and on the opposite side of the fin (2) the side wings (8, 10) turn inwards in front of the fin (2).

5. Method for manufacturing the wave energy conversion apparatus according to any of the claims above, **characterized in that** as to the energy capture at the particular installation site the fin (2) and its components are determined and manufactured as optimal as possible using a determining function F(SS, FP), which comprises two groups of variables, namely SS and FP, where group SS depicts the probability distribution of the local sea states at the installation site, and group FP comprises the planning parameters of the planning object, for example the planning parameters of the fin (2) and its components.

6. Method for manufacturing the wave energy conversion apparatus according to claim 5, **characterized in that**
as the variable group SS = Prob(HmO, Te, Dir, Tide); the values used are:
Prob = Probability distribution, having values from 0 to 100 %, (0-100%)
Hm0 = Significant wave height, having values from 0 to 100 meters, (0-100m)
Te = Energy period, having values from 0 to 100 seconds, (0-100s)
Dir = Wave direction, having values from 0 to 360 degrees, (0-360°)
Tide = Tide height, having values from 0 to 100 meters, (0-100m),
and
as the variable group FP = H, W, HB, RB, HP, D; the values used are:
H = Height of the fin (2), having values from 0 to 100 meters, (0-100m)
W = Width of the fin (2), having values from 0 to 100 meters, (0-100m)
HB = Distance between the center axis of the pivot shaft (3) and the center of the float part (2b), having values from 0 to 100 meters, (0-100m)
RB = Radius of the float part (2b), having values from 0 to 100 meters, (0-100m)
HP = Distance between the sea bed and the center axis of the pivot shaft (3), having values from 0 to 100 meters, (0-100m)
D = Depth of water at L.A.T., having values from 0 to 100 meters, (0-100m),
and that the calculation and optimization of the planned object, such like the fin (2) of the wave energy conversion apparatus is controlled with controlling means such as an optimizer by selecting the planning parameters within the parameter limits in each calculation cycle and using the calculation results of each cycle to deduce to which direction the parameters should be changed for the next calculation cycle, until the parameters yield a satisfactory result.

7. Method for manufacturing the wave energy conversion apparatus according to any of the claims above, **characterized in that** in one calculation cycle the method comprises for example following steps:
- The initial planning parameters are chosen by using the optimizer, the parameters including at least one or more of the following: geometry data of the fin (2), comprising for example the height and width of the fin body (2c), the radius of the float part (2b), the vertical location of the float part (2b), etc.
- Elements of the calculation mesh are created with an element mesh generator using the parameters chosen in the previous step.
- The data of the calculation mesh is arranged to the format that is suitable for the Potential Flow Solver.
- Hydrodynamic magnitudes are calculated using the Potential Flow Solver. As a result, the hydrodynamic magnitudes of the element mesh are gained.
- Using the optimizer, the calculation results of previous step are prepared to an appropriate format for the next step.
- The prepared results of previous step are post-processed in the Post-processing unit from the frequency-domain to the time-domain.
- Using the optimizer, the handling results of previous step are post-processed to an appropriate format for the next Step.
- Needed prevailing sea state combinations are calculated using the Time-domain solver so that different sea states are calculated in a time-domain, and the results of the calculations are at least the motion of the fin (2), energy captured by the PTO (7), and forces directed towards the fin (2) in time-series.
- Using the optimizer, the calculation results of previous step are post-processed to appropriate loading data for the FEM solver.
- An analysis about the forces is performed with a Finite Element Analysis (FEA) method using the FEM solver so that the results of the FEA are time-series of stresses of the critical points.
- Using the optimizer, the FEA results of the previous step are post-processed to stress profiles so that the time-series of stresses are converted to loading blocks, for example by using a rainflow analysis.
- A fatigue analysis is performed so that by joining the loading blocks and the material-dependent S-N curves the fatigue life is calculated using, for instance, the Palmgren-Miner rule.
- An energy production analysis is performed by calculating average yearly energy using the average energy value captured by the PTO (7), and the probability distribution of the sea states.
- The calculation results are evaluated, and if needed a new calculation cycle is initiated from the first step basing the evaluation on the fatigue result and the yearly amount of captured energy so that if the evaluation yields satisfactory results the calculation is terminated, otherwise the planning parameters are changed and the calculation is started again from the first step.
